**Europäisches Patentamt**

**European Patent Office**

**Office européen des brevets**

(19)

(11) Numéro de publication : **0 186 573**
**B1**

(12)

# FASCICULE DE BREVET EUROPÉEN

(51) Int. Cl.⁴ : **B 60 K 41/22**

(45) Date de publication du fascicule du brevet :
**27.07.88**

(21) Numéro de dépôt : **85402462.7**

(22) Date de dépôt : **11.12.85**

(54) Dispositif de detecion de changement de vitesse pour la commande d'un système de manoeuvre d'un embrayage à partir de la timonerie de manoeuvre d'une boîte de vitesse associée.

(30) Priorité : **13.12.84 FR 8419082**

(43) Date de publication de la demande :
**02.07.86 Bulletin 86/27**

(45) Mention de la délivrance du brevet :
**27.07.88 Bulletin 88/30**

(84) Etats contractants désignés :
**DE GB IT**

(56) Documents cités :
**FR-A- 1 115 791**
**FR-A- 2 288 643**
**FR-A- 2 535 656**
**GB-A- 2 125 136**
**US-A- 1 685 502**

(73) Titulaire : **VALEO**
**64 Avenue de la Grande Armée**
**F-75017 Paris (FR)**

(72) Inventeur : **Grunberg, Pierre**
**10, Villa de Cronstadt**
**F-75019 Paris (FR)**

(74) Mandataire : **CABINET BONNET-THIRION**
**95 Boulevard Beaumarchais**
**F-75003 Paris (FR)**

Jouve, 18, rue St-Denis, 75001 Paris, France

EP 0 186 573 B1

## Description

L'invention concerne la commande d'un système de manœuvre automatique d'un embrayage à partir de la timonerie de manœuvre d'une boîte de vitesse associée à cet embrayage. Elle s'applique notamment mais non exclusivement au cas de véhicules automobiles.

Ainsi qu'on le sait un système de manœuvre automatique pour embrayage est un système adapté à manœuvrer par lui-même un embrayage dans le sens de l'engagement (transmission de couple) ou du désengagement (interruption de la transmission de couple) et dont la mise en œuvre est commandée par un dispositif de commande adapté à lui appliquer ou non un signal d'activation. Le plus souvent, un tel système comporte un moyen de manœuvre tel qu'un moteur qui reçoit, ou non, un signal d'activation, par exemple de type électrique.

On connaît déjà, d'après le brevet FR-A-1 075 404 demandé le 23 février 1953 ou son addition FR-E-66 197 demandée le 13 juillet 1954, un dispositif de commande, pour l'activation et la désactivation d'un système de manœuvre automatique d'embrayage, constitué par un levier de changement de vitesse du type « levier cassé ». Le levier se compose de deux tronçons globalement alignés, dont un tronçon de manœuvre soumis à l'action d'un usager et un tronçon de commande relié à une boîte de vitesse par une timonerie de manœuvre appropriée. Le tronçon de manœuvre admet un débattement vis-à-vis du tronçon de commande ; ces deux tronçons comportent deux contacts électriques respectifs adaptés à venir établir un circuit (ou au contraire le couper) lorsque le tronçon de manœuvre s'incline par rapport au tronçon de commande sous l'action d'un usager.

En fait les dispositifs de commande d'embrayage de ce type présentent des inconvénients, celui notamment de provoquer en pratique un désengagement de l'embrayage dès que le levier de changement de vitesse est sollicité, et ce, quel que soit notamment le sens de la sollicitation : il peut en résulter des opérations intempestives de désengagement qui peuvent se révéler préjudiciables à la bonne tenue de l'embrayage, à la sécurité et au confort dans le cas d'un véhicule automobile. En outre, dans ces dispositifs, la fin du désengagement de l'embrayage est généralement contrôlée avec une précision insuffisante pour assurer des changements de vitesse avec toute la souplesse désirée.

La présente invention a pour principal objet de pallier cet inconvénient grâce à une commande adaptée à n'agir que lors d'une sollicitation dans le sens de désengagement de la vitesse enclenchée. Elle a également pour objet de permettre que l'embrayage reste désengagé tant qu'une nouvelle vitesse n'est pas engagée. Elle a aussi pour objet de permettre une commande adéquate d'un système de manœuvre d'un embrayage sans usure exagérée entre les éléments qui interviennent, c'est-à-dire une commande qui présente une grande longévité dans ses performances.

L'invention propose à cet effet un dispositif de détection de changement de vitesse pour la commande d'un système de manœuvre automatique d'un embrayage à partir de la timonerie de manœuvre d'une boîte de vitesse associée à cet embrayage, du genre comportant un premier élément de timonerie, dit élément aval, admettant une course de débattement entre deux positions limites correspondant à l'engagement de vitesses au sein de la boîte de vitesse et un second élément de timonerie, dit élément amont, attelé élastiquement à l'élément aval par des moyens de rappel en une position neutre, et auquel est associé un ensemble indicateur de déplacement commandant un circuit d'activation pour ledit système de manœuvre automatique, caractérisé en ce que ledit ensemble indicateur de déplacement comporte des moyens de repérage adaptés à repérer, lorsque l'élément aval est en une de ses positions limites, le sens dans lequel un déplacement de l'élément amont à partir de sa position neutre provoque un mouvement de l'élément aval vers son autre position limite et des moyens d'autorisation adaptés à commander sélectivement le circuit d'activation en vue d'un désengagement de l'embrayage lorsque l'élément amont se déplace dans le sens précité.

Dans un mode préféré de réalisation de l'invention, l'élément amont admet une course de débattement entre deux positions limites correspondant respectivement aux positions limites de l'élément aval, et les moyens d'autorisation commandant le circuit d'activation lorsque l'élément amont se déplace entre ses positions limites. L'invention préconise plus particulièrement que ledit ensemble indicateur de déplacement soit adapté à détecter et indiquer la présence ou non de chacun desdits éléments en l'une de ses positions limites en sorte qu'un désengagement de l'embrayage par ledit système de manœuvre automatique ait lieu lorsque l'un quelconque desdits éléments est situé entre ses positions extrêmes.

On notera qu'un dispositif de commande selon l'invention provoque avantageusement un désengagement de l'embrayage tant que l'un de deux éléments de la timonerie de manœuvre d'une boîte de vitesse associée à l'embrayage n'est pas parvenu en l'une de ses positions extrêmes. L'invention propose ainsi de s'intéresser aux positions de chacun de deux éléments de timonerie par rapport à une pièce fixe, un châssis en pratique, plutôt que de considérer, comme dans le cas des leviers « cassés » précités, la position relative de ces éléments. L'invention permet donc que, le cas échéant, les éléments considérés ne se suivent pas dans la timonerie de manœuvre de la boîte de vitesse. Elle préconise toutefois que la position des éléments considérés soit détectée par un même détecteur de position, qu'il soit mécanique optique ou électrique, et que, pour ce faire, lesdits éléments soient adjacents. L'invention propose tout particulièrement que les éléments considérés soient des éléments pivotants, de préférence montés côte à côte sur un même arbre : ces éléments sont avantageusement montés sur l'arbre de passage de vitesse de la boîte de vitesse. La position des deux éléments considérés est de préférence détectée par un palpeur appliqué contre les tranches de cames similaires ménagées sur ces éléments ; en pratique le palpeur admet deux configurations principales correspondant respectivement à l'activation ou non du système de manœuvre associé et, en principe, seules les rampes que présentent les cames en vue de faire passer le palpeur de l'une à l'autre de ces configurations ont besoin d'être identiques sur les deux cames. Un tel capteur peut être remplacé, par exemple par une cellule photoélectrique recevant un rayon intercepté ou non par l'un ou l'autre des éléments considérés, par leur profil périphérique ou par le bord de fenêtres qui y sont ménagées.

D'autres objets, caractéristiques et avantages de l'invention ressortent de la description qui suit, donnée à titre d'exemple non limitatif en regard des dessins annexés sur lesquels :

— la figure 1 est une vue latérale schématique en coupe d'un dispositif de commande selon l'invention, monté en un bout de l'arbre de passage de vitesse d'une boîte de vitesse ;

— la figure 2 en est une vue éclatée de face ;

— la figure 3 en est une vue schématique de face en configuration de repos ;

— la figure 4 en est une vue schématique de face lorsqu'une première vitesse est engagée ;

— la figure 5 en est une vue schématique de face au début d'une manœuvre de changement de vitesse ;

— la figure 6 en est une vue schématique de face vers la fin de ladite manœuvre de changement de vitesse ; et

— la figure 7 en est une vue schématique de face à la fin de ladite manœuvre de changement de vitesse, lorsqu'une seconde vitesse est engagée.

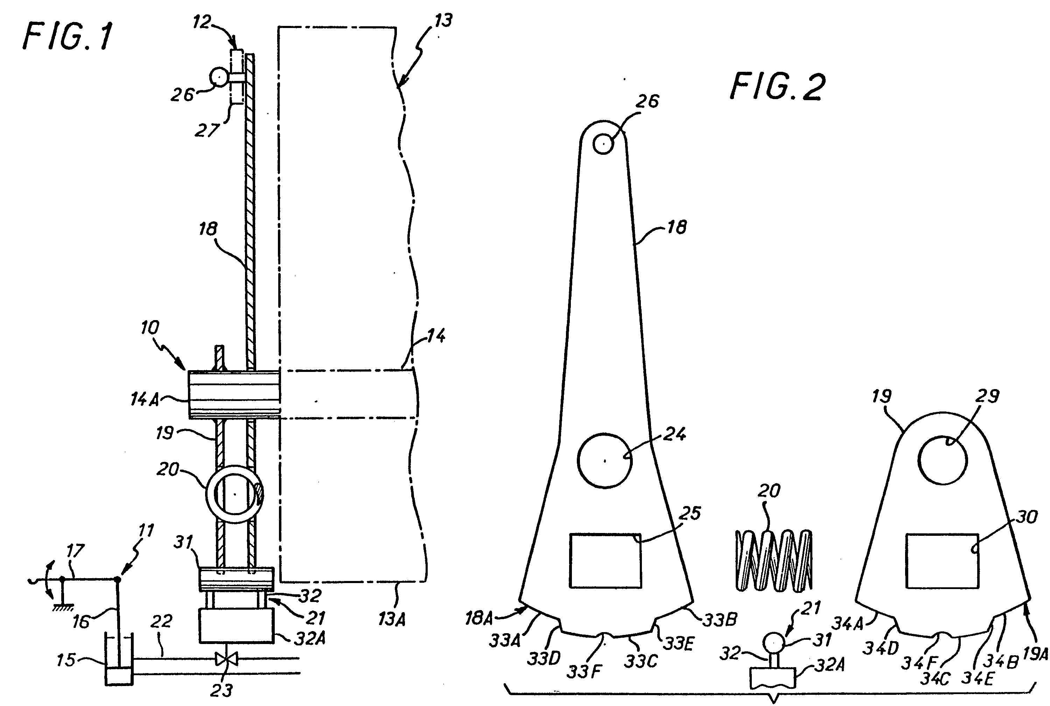

Les figures 1 à 7 représentent un exemple de réalisation d'un dispositif 10 de détection de changement de vitesse selon l'invention pour l'activation ou la désactivation d'un système 11 de manœuvre d'un embrayage (non représenté) lors d'un changement dans la configuration de la timonerie de manœuvre 12 d'une boîte de vitesse 13.

A la figure 1 la boîte de vitesse 13 comporte un carter 13A et un arbre de passage de vitesse 14 dont une extrémité 14A sort dudit carter. Dans le mode de réalisation préféré de l'invention représenté aux figures 1 à 7 le dispositif 10 de détection de changement de vitesse est monté sur cette extrémité 14A.

Ce dispositif 10 de détection de changement de vitesse contrôle l'état du système 11 de manœuvre automatique d'embrayage qui, ne faisant pas partie en lui-même de l'invention, n'est ici décrit et représenté que de façon très schématique. Ce système 10 peut être de tout type approprié ; il peut notamment être du type décrit et représenté dans le brevet FR-2 523 743 déposé le 18 mars 1982 ou son certificat d'addition FR-2 541 793 déposé le 25 février 1983, au nom de la demanderesse. Tel que représenté à la figure 1 à titre de variante le système 11 comporte un vérin 15 dont la tige rétractable 16 est articulée en son extrémité sur un levier 17 à deux bras formant fourchette de débrayage : son extrémité gauche agit par exemple sur une butée de débrayage non représentée.

Tel que représenté aux figures 1 et 2 le dispositif 10 de détection de changement de vitesse comporte deux éléments mobiles de timonerie, amont 18 et aval 19, accouplés en mouvement par un organe 20 d'attelage ou d'accouplement élastique ainsi qu'un ensemble indicateur de position ou de déplacement 21 adapté à coopérer avec les éléments 18 et 19 en sorte de contrôler l'état d'un circuit 22 d'activation du système 11 de manœuvre automatique d'embrayage. Le circuit 22 est par exemple un circuit hydraulique comportant une valve 23 dont l'état est fixé par l'ensemble indicateur de position ; dans le cas où le système de manœuvre automatique d'embrayage comporte un moteur électrique, le circuit d'activation comporte en variante une source d'alimentation et un interrupteur dont l'état est fixé par l'ensemble indicateur de position 21.

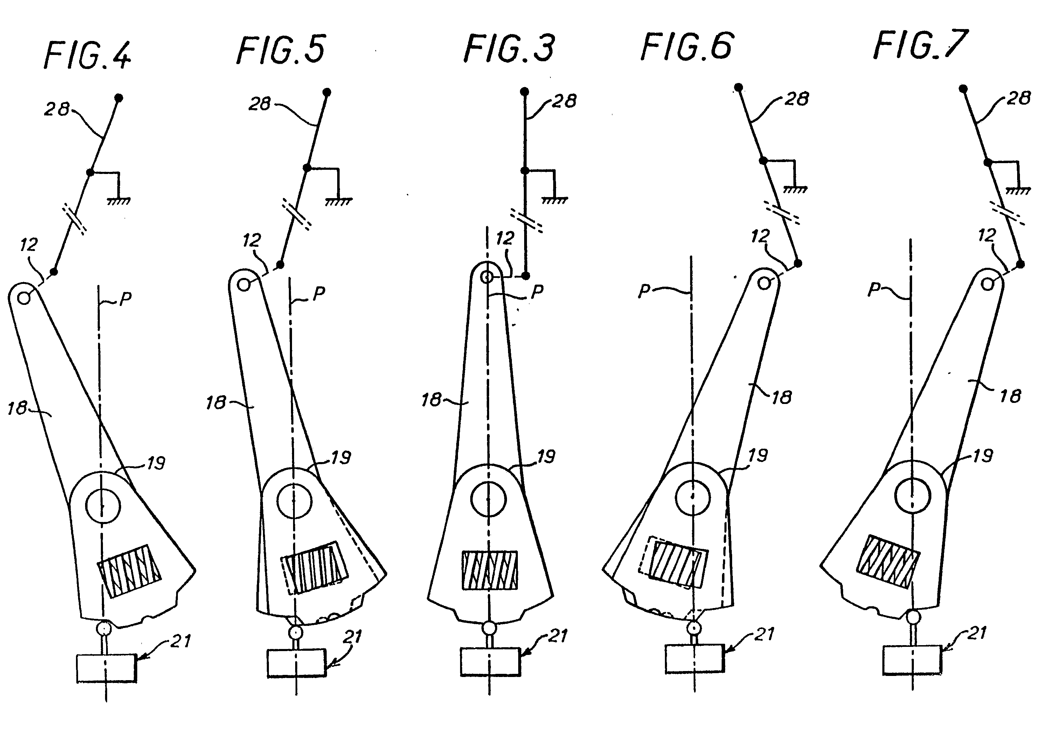

Les éléments de timonerie 18 et 19 sont tous deux montés pivotants sur l'extrémité en saillie 14A de l'arbre de passage de vitesse 14. L'un 18 de ces éléments, en forme de levier à deux bras, comporte un orifice 24 par lequel il est engagé librement sur l'extrémité 14A de l'arbre 14 ainsi qu'une fenêtre 25 pour la réception de l'organe 20 d'accouplement élastique ; il comporte en outre, en une de ses extrémités, un ergot d'ancrage 26 destiné à coopérer avec un élément plus en amont dans la timonerie de manœuvre, tel qu'une tringle 27 représentée en traits mixtes à la figure 1. Cet élément 18 est commandé en position par un usager agissant en pratique sur un levier de vitesse 28 (voir figures 3 à 7) situé tout à fait en amont de la timonerie de manœuvre 12 : l'élément 18 constitue au sein du dispositif 10 un élément menant ou élément d'actionnement. L'autre élément 19, en forme de levier à un seul bras, comporte un orifice 29 par lequel il est engagé et assujetti, par soudure par exemple, sur l'extrémité 14A de l'arbre 14, de préférence à l'opposé du carter 13A de la boîte de vitesse par rapport à l'élément 18 en sorte d'empêcher que ce dernier ne puisse se dégager de l'extrémité 14A par dérive axiale. L'élément 19 formant élément mené ou d'entraînement pour l'arbre 14 de passage de vitesse comporte en outre une fenêtre 30 identique à la fenêtre 25 de l'élément 18, ces fenêtres 25 et 30 étant disposées de la même manière vis-à-vis respectivement des orifices 24 et 29.

L'accouplement élastique de ces éléments 18 et 19 en pivotement est obtenu par un moyen d'accouplement élastique (formant organe de rappel en position neutre) engagé simultanément dans des évidements réalisés dans ces éléments. En effet un ressort 20 est engagé simultanément dans les fenêtres 25 et 30 en étant de préférence précontraint en appui simultané sur les tranches sensiblement radiales que présentent ces fenêtres. En variantes non représentées le moyen d'accouplement élastique est un plot en caoutchouc, un billage, ou analogues. Il est à noter qu'il suffit que ce moyen d'accouplement puisse venir prendre appui sur chacun des éléments de timonerie parallèlement à la direction de débattement relatif entre ceux-ci. Il peut donc être reçu dans de simples creux ménagés dans ces éléments, de manière par exemple à éviter tout échappement de ce moyen d'accouplement vis-à-vis de ces éléments de timonerie.

On notera que dans l'exemple représenté la fenêtre 25 est ménagée à l'opposé de l'ergot 26 par rapport à l'orifice 24 et que le bras le plus court de l'élément 18, dans lequel est ménagé cette fenêtre 25 a sensiblement le même profil que le levier à un seul bras que constitue l'élément 19. En position de repos du ressort 20 les profils des éléments 18 et 19 sont sensiblement superposés axialement (position relative neutre).

Les éléments 18 et 19 admettent autour de l'arbre 14 de passage de vitesse un même débattement angulaire entre deux positions limites (voir figures 4 et 7) pour lesquelles une vitesse est engagée dans la boîte de vitesse. Les positions sont disposées de façon symétrique par rapport à un plan axial de référence schématisé en P aux figures 3 à 7.

Dans ce plan est disposé, en regard des tranches 18A et 19A des éléments 18 et 19, un cylindre 31 orienté axialement formant palpeur, qui est fixé sur des tiges 32 adaptées à pénétrer plus ou moins profondément, parallèlement au plan P, dans un boîtier 32A fixe par rapport au carter 13A de la boîte de vitesse ou au châssis le supportant. Le palpeur 31 forme avec ses tiges coulissantes 32 et le boîtier 32A l'ensemble indicateur de déplacement 21 précité ; selon le degré d'enfoncement des tiges 32 cet ensemble indicateur admet deux configurations de référence pour lesquelles il est adapté à provoquer, ou non, l'activation du système 11 de manœuvre automatique d'embrayage.

Le degré d'enfoncement des tiges 32 est contrôlé par les profils en forme de came que présentent les tranches 18A et 19A des éléments 18 et 19. Ces tranches présentent deux plages latérales d'appui 33A et 33B ou 34A et 34B, de préférence centrées sur l'arbre 14, de part et d'autre d'une zone de came en saillie 33C ou 34C, de préférence concentriques aux plages d'appui précitées, à laquelle elles se raccordent par des rampes de transition 33D et 33E ou 34D et 34E. Ces zones de came en saillie présentent avantageusement en leur milieu des encoches 33F ou 34F formant cran de point mort. Les zones de came en saillie occupent avec les rampes de transition un secteur angulaire sensiblement égal, quoique, en pratique, légèrement inférieur, au débattement angulaire qu'admettent les éléments 18 et 19 entre leurs positions limites.

En configuration de point mort de la boîte de vitesse, telle qu'elle est représentée à la figure 3, les éléments 18 et 19 sont alignés selon le plan P. Leurs profils de came 18A et 19A sont superposables axialement et le cylindre 31 formant palpeur est engagé dans les crans de point mort 33F ou 34F et les tiges 32 sont enfoncées dans le boîtier 32A : il y a commande en désengagement de l'embrayage associé.

Lorsqu'une vitesse est engagée, comme cela est représenté aux figures 4 et 7, le palpeur 31 est en appui contre une plage latérale d'appui de chaque élément 33A et 34A ou 33B et 34B, et les tiges 32 sont en configuration d'extension : il y a commande en engagement de l'embrayage. De façon avantageuse le palpeur est également en contact ou presque avec les rampes de transition avoisinantes grâce à quoi une faible rotation de l'un quelconque des éléments 18 et 19 suffit à provoquer, grâce à la rampe associée, un enfoncement du palpeur et de ses tiges dans le boîtier ce qui provoque une commande en désengagement de l'embrayage. Il est à noter que le ressort 20 sous précontrainte ne permet un tel décalage angulaire entre les éléments 18 et 19 qu'au-delà d'un couple minimum appliqué à l'élément 19, ce qui élimine les parasites.

Lorsque, à partir de la configuration de la figure 4, la timonerie 12 de manœuvre de la boîte de vitesse est sollicitée dans le sens d'un changement de vitesse, deux cas peuvent apparaître. En l'absence de couple de retenue appliqué à la boîte de vitesse, l'arbre de passage de vitesse 14 est libre de tourner et l'élément amont d'actionnement 18, ainsi que l'élément aval d'entraînement 19, peuvent quitter sans résistance leurs positions limites correspondant à la vitesse engagée jusque-là. Par leurs rampes de transition 33D et 34D ces éléments provoquent tous deux par action sur le palpeur 31 un enfoncement des tiges 32 dans le boîtier d'où une commande en désengagement de l'embrayage. Par contre lorsque la boîte de vitesse transmet un couple d'entraînement, l'arbre de passage de vitesse 14 et l'élément 19 restent généralement bloqués en position. L'élasticité du ressort 20 permet toutefois que, au-delà d'un effort minimum, l'élément 18 puisse commencer à tourner (voir figure 5), provoquant ainsi l'enfoncement du palpeur ; cela commande un désengagement de l'embrayage, d'où une suppression du couple de retenue appliqué par celui-ci à l'entrée de la boîte de vitesse : l'arbre de passage de vitesse se débloque, ainsi que l'élément 19 et le ressort 20 provoque le rattrapage par ceux-ci de leur retard angulaire par rapport à l'élément d'actionnement 18.

En fin de course l'élément amont d'actionnement 18 parvient sans résistance en son autre position limite mais il arrive parfois que la vitesse correspondante soit difficile à engager : l'arbre de passage de vitesse reste donc en deçà de sa position finale. Il en est de même de l'élément 19 qui, grâce à la compressibilité du ressort 20, peut prendre un léger retard sur l'élément 18. Ainsi qu'il apparaît à la figure 6, l'élément 19 maintient le palpeur en condition d'enfoncement : l'embrayage reste donc désengagé tant que l'arbre de passage de vitesse n'est pas effectivement parvenu en configuration finale.

On appréciera qu'une action sur le levier de changement de vitesse dans le sens tendant à engager une vitesse déjà engagée n'a pas d'action sur le dispositif 10, ce qui élimine des ordres de débrayage intempestifs.

Cela peut s'expliquer par le fait que le profil en came de l'élément amont 18 constitue, grâce à ses rampes 33D et 33E, des moyens de repérage adaptés à identifier le sens dans lequel l'élément amont doit se déplacer, à partir de sa position neutre par rapport à l'élément aval, pour provoquer un mouvement de l'élément aval depuis l'une de ses positions limites vers l'autre ; en effet, lorsque l'élément amont est dans l'une de ses positions limites, il n'y a qu'une seule rampe au voisinage du palpeur, disposée par rapport à celui-ci dans le sens d'un déplacement vers l'autre position limite ; ces rampes constituent avec le palpeur 31 et la tranche 33C des moyens d'autorisation adaptés à commander le circuit d'activation 22 lorsque l'élément amont se déplace dans le « bon » sens.

On notera que le bon contrôle des moments où l'embrayage doit être désengagé ou réengagé par le système 11 de manœuvre automatique dépend essentiellement des rampes de transition et de leur proche voisinage sur les zones de cames des tranches 18A et 19A. Ce sont donc essentiellement ces rampes et ces proches voisinages qui doivent être globalement superposés en condition de repos et les zones de cames en saillies peuvent présenter ailleurs des profils différents sur les deux éléments. En fait ces rampes peuvent avoir une même inclinaison mais des longueurs différentes. On notera par ailleurs que le rôle des plages latérales de ces tranches est principalement d'empêcher que le palpeur et ses tiges 32 ne sortent trop du boîtier 32A : il peut suffir qu'il n'y ait de plages terminales que sur un seul élément, voire sur aucun élément si les tiges 32 sont suffisamment retenues dans le boîtier en cas d'extension. En variante non représentée ce sont les plages latérales des tranches des éléments 18 et 19 qui sont en saillie.

Il va de soi que la description qui précède n'a été proposée qu'à titre indicatif et que de nombreuses variantes de réalisation peuvent être proposées par l'Homme de l'art sans sortir du cadre de l'invention tant en ce qui concerne la forme des éléments de timonerie considérés (leviers coudés ou autres) qu'en ce qui concerne la nature de l'ensemble détecteur de déplacement associé et de ses moyens de repérage et d'autorisation. Ainsi, pour gagner de la place, on peut ménager les fenêtres de réception du ressort 20 entre l'arbre de passage de vitesse et le point d'attelage 26 au reste de la timonerie. L'organe d'accouplement peut être de toute nature appropriée. Les éléments auxquels est associé l'ensemble indicateur de déplacement peuvent être dissociés l'un de l'autre et vis-à-vis de l'arbre de passage de vitesse ; il peut s'agir de tringles en mouvement linéaire ; l'ensemble indicateur de déplacement peut être dédoublé en sorte de tester séparément la présence ou non de chacun des éléments en une position limite. En fait il suffit, dans une version simplifiée de l'invention, que l'ensemble indicateur de déplacement soit adapté à tester la présence ou non du seul élément amont en une position limite. Cet ensemble indicateur de déplacement peut être de toute nature ; il peut comporter un capteur électronique (analogique, potentiomètre, capteur à effet Hall, capteur inductif par exemple) ou aussi un capteur optique avec des perçages dans les éléments qui ne viennent simultanément en alignement avec une source lumineuse que si ces éléments sont en position appropriée.

En fait, les moments où l'activation ou la désactivation du système de manœuvre automatique de l'embrayage est provoquée dépendent bien sûr de l'effet qu'a ce système sur l'embrayage (engagement ou désengagement).

## Revendications

1. Dispositif de détection de changement de vitesse pour la commande d'un système de manœuvre automatique d'un embrayage (11) à partir de la timonerie de manœuvre d'une boîte de vitesse (13) associée à cet embrayage, du genre comportant un premier élément de timonerie, dit élément aval (19), admettant une course de débattement entre deux positions limites correspondant à l'engagement de vitesses au sein de la boîte de vitesse et un second élément de timonerie, dit élément amont (18), attelé élastiquement à l'élément aval par des moyens de rappel (20) en une position neutre, et auquel est associé un ensemble indicateur de déplacement (21) commandant un circuit d'activation pour ledit système de manœuvre automatique, caractérisé en ce que ledit ensemble indicateur de déplacement (21, 31, 32, 33) comporte des moyens de repérage (33D, 33E) adaptés à repérer, lorsque l'élément aval (19) est en une de ses positions limites, le sens dans lequel un déplacement de l'élément amont (18) à partir de sa position neutre provoque un mouvement de l'élément aval vers son autre position limite et des moyens d'autorisation (31, 33C, 33D, 33E) adaptés à commander sélectivement le circuit d'activation (22) en vue d'un désengagement de l'embrayage lorsque l'élément amont se déplace dans le sens précité.

2. Dispositif selon la revendication 1 caractérisé en ce que l'élément amont (18) admet une course de débattement entre deux positions limites correspondant respectivement aux positions limites de l'élément aval, et que les moyens d'autorisation (31, 32, 33) commandent le circuit d'activation lorsque l'élément amont se déplace entre ses positions limites.

3. Dispositif selon la revendication 2, caractérisé en ce que ledit ensemble indicateur de déplacement (21, 31, 32, 33) est adapté à détecter et indiquer la présence ou non de chacun desdits éléments (18, 19) en l'une de ses positions limites en sorte qu'un désengagement de l'embrayage par ledit système de manœuvre automatique (11) ait lieu lorsque l'un quelconque desdits éléments (18, 19) est situé entre ses positions extrêmes.

4. Dispositif selon la revendication 3, caractérisé en ce que lesdits éléments (18, 19) de timonerie sont disposés côte à côte et coopèrent avec un même organe (31) au sein de l'ensemble indicateur de position (21) pour le suivi de leurs positions.

5. Dispositif selon la revendication 4, caractérisé en ce que lesdits éléments de timonerie (18, 19) coopèrent par leurs tranches (18A, 19A) avec un palpeur (31) fixé à des tiges (32) rétractables dans un boîtier (32A).

6. Dispositif selon la revendication 5, caractérisé par l'aménagement sur lesdites tranches (18A, 19A) desdits éléments de timonerie (18, 19) de rampes de transition respectivement superposables (33D, 33E, 34D, 34E) dont l'écart est sensiblement égal au débattement des éléments de timonerie entre leurs positions limites et qui sont adaptées à faire passer le palpeur de l'une à l'autre de deux configurations de référence.

7. Dispositif selon la revendication 6, caractérisé en ce que ces rampes de transition raccordent des plages latérales d'appui (33A, 33B, 34A, 34B) à une zone centrale de came en saillie (33C, 34C).

8. Dispositif selon l'une quelconque des revendications 2 à 7, caractérisé en ce que lesdits éléments de timonerie (18, 19) sont montés pivotants sur un même arbre (14), l'un (18) d'entre eux pouvant tourner librement tandis que l'autre (19) est fixé à cet arbre.

9. Dispositif selon la revendication 8, caractérisé en ce que lesdits éléments de timonerie (18, 19) sont montés pivotants sur l'arbre de passage de vitesse (14) que comporte la boîte de vitesse (13).

10. Dispositif selon l'une quelconque des revendications 2 à 9 caractérisé en ce que, lesdits éléments de timonerie (18, 19) étant disposés côte à côte, ils sont attelés par un moyen d'accouplement élastique (20) engagé simultanément dans des évidements (25, 30) réalisés dans ces éléments.

11. Dispositif selon la revendication 10, caractérisé en ce que les éléments de timonerie sont attelés par un ressort (20) engagé et maintenu dans des fenêtres identiques (25, 30) ménagées dans ces éléments, en sorte d'être en appui sur des tranches de ces fenêtres perpendiculaires aux courses de débattement des éléments entre leurs positions limites.

12. Dispositif selon la revendication 11, caractérisé en ce que ledit ressort est sous précontrainte de compression.

**Claims**

1. Apparatus for detecting a speed change, for the control of an automatic operating means for a clutch (11) by means of the gear change mechanism of a gearbox (13) associated with the clutch, of the kind comprising a first gear change element referred to as the downstream element (19), for permitting selection to be made between two limit positions corresponding to the engagement of the gears in the gearbox, and a second gear change element, referred to as the upstream element (18), resiliently coupled to the downstream element by biassing means (20) in a neutral position, and with which is associated a shift indicating mechanism controlling a circuit for actuating the said automatic operating means, characterised in that the said shift indicating mechanism (21, 31, 32, 33) comprises sensing means (33D, 33E) adapted to sense, when the downstream element (19) is in one of its limit positions, the direction in which a displacement of the upstream element (18) away from its neutral position causes the downstream element to move towards its other limit position, and control means (31, 33C, 33D, 33E) adapted to control the actuating circuit (22) selectively in response to disengagement of the clutch when the upstream element is displaced in the said direction.

2. Apparatus according to Claim 1, characterised in that the upstream element (18) permits selection between two limit positions corresponding respectively to the limit positions of the downstream element, and in that the said control means (31, 32, 33) control the actuating circuit when the upstream element is displaced between its limit positions.

3. Apparatus according to Claim 2, characterised in that the said shift indicating mechanism (21, 31, 32, 33) is adapted to detect and indicate the presence or absence of each of the said elements (18, 19), with respect to one of its limit positions, in such a way that disengagement of the clutch by means of the said automatic operating means (11) takes place when either one of the said elements (18, 19) is between ist extreme positions.

4. Apparatus according to Claim 3, characterised in that the said gear change elements (18, 19) are arranged side by side and co-operate with a common member (31), which is part of the position indicating mechanism (21), for following their positions.

5. Apparatus according to Claim 4, characterised in that the said gear change elements (18, 19) co-operate through their edges (18A, 19A) with a follower (31) fixed to arms (32) which are retractable into a housing (32A).

6. Apparatus according to Claim 5, characterised by the provision on the said edges (18A, 19A) of the said gear change elements (18, 19) of camming ramps (33D, 33E, 34D, 34E) which can respectively be superimposed on each other, which are spaced apart by an amount substantially equal to the travel of the gear change elements between their limit positions, and which are adapted to move the follower from one or other of two reference positions.

7. Apparatus according to Claim 6, characterised in that these camming ramps join laterally engaging surface positions (33A, 33B, 34A, 34B) to an outwardly projecting central cam surface (33C, 34C).

8. Apparatus according to any one of Claims 2 to 7, characterised in that the said gear change elements (18, 19) are pivotally mounted on a common shaft (14), one (18) of them being freely rotatable whilst the other (19) is fixed to the said shaft.

9. Apparatus according to Claim 8, characterised in that the said gear change elements (18, 19) are pivotally mounted on the shift bar (14) of the gearbox (13).

10. Apparatus according to any one of Claims 2 to 9, characterised in that the said gear change elements are disposed side by side and are coupled by a resilient coupling means (20) engaged in common within apertures (25, 30) formed in the said elements.

11. Apparatus according to Claim 10, characterised in that the gear change elements are coupled by a spring (20) engaged and held in identical apertures (25, 30) formed through the said elements, in such a way as to engage end surfaces of the apertures at right angles to the paths of displacement of the elements between their limit positions.

12. Apparatus according to Claim 11, characterised in that the said spring is precompressed.


**Patentansprüche**

1. Detektorvorrichtung einer Gangschaltung für die Steuerung einer automatischen Betätigungsanlage (11) einer Kupplung, ausgehend von einem Betätigungsgestänge eines dieser Kupplung zugeordneten Wechselgetriebes (13), mit einem ersten Gestängeelement, als unteres Element (19) bezeichnet, das einen Auschlagweg zwischen zwei Grenzpositionen entsprechend dem Eingriff der Gänge im Inneren des Getriebes zuläßt und einem zweiten Gestängeelement, als oberes Element (18) bezeichnet, das mittels Rückstellmittel (20) in einer Neutralstellung elastisch mit dem unteren Element (19) verbunden ist, und welchem eine Verschiebungsanzeige-Anordnung (21), die einen Aktivierungskreislauf für die automatische Betätigungsanlage steuert, zugeordnet ist, dadurch gekennzeichnet, daß die Verschiebungs-Anzeigeanordnung (21, 31, 32, 33) Erkennungsmittel (33D, 33E) aufweist, die geeignet sind, wenn das untere Element (19) sich in einer seiner Grenzpositionen befindet, die Richtung zu erkennen, in welcher eine Verschiebung des oberen Elements (18), ausgehend von seiner Neutralstellung eine Bewegung des unteren Elements (19) zu seiner anderen Grenzposition hin hervorruft, und Freigabemittel (31, 33C, 33D, 33E), die ausgebildet sind, wahlweise den Aktivierungskreislauf (22) hinsichtlich eines Ausrückens der Kupplung zu steuern, wenn das obere Element (18) sich in die vorgenannte Richtung verschiebt.

2. Vorrichtung nach Anspruch 1, dadurch gekennzeichnet, daß das obere Element (18) einen Ausschlagweg zwischen zwei Grenzpositionen entsprechend jeweils den Grenzpositionen des unteren Elements zuläßt und daß die Freigabemittel (31, 32, 33) den Aktivierungskreislauf steuern, wenn das obere Element sich zwischen seinen Grenzpositionen verschiebt.

3. Vorrichtung nach Anspruch 2, dadurch gekennzeichnet, daß die genannte Verschiebungsanzeige-Anordnung (21, 31, 32, 33) angepaßt ist, die Gegenwart oder das Fehlen jedes der Elemente (18, 19) in einer ihrer Grenzpositionen zu erkennen und anzuzeigen, derart, daß ein Ausrücken der Kupplung durch die genannte automatische Betätigungsanlage (11) erfolgt, wenn ein beliebiges der genannten Elemente (18, 19) sich zwischen seinen Extrempositionen befindet.

4. Vorrichtung nach Anspruch 3, dadurch gekennzeichnet, daß die Gestängelemente (18, 19) nebeneinander angeordnet sind und mit einem selben Organ (31) im Inneren der Positionsanzeige-Anordnung (21) für die Folge ihrer Positionen zusammenarbeitet.

5. Vorrichtung nach Anspruch 4, dadurch gekennzeichnet, daß die genannten Gestängeelemente (18, 19) mit ihren Rändern (18A, 19A) mit einem Taster (31) zusammenwirken, der an in ein Gehäuse (32A) einsschiebbaren Schäften (32) befestigt ist.

6. Vorrichtung nach Anspruch 5, gekennzeichnet durch jeweils übereinanderlegbare Übergangsrampen (33D, 33E, 34D, 34E) an den genannten Rändern (18A, 19A) der Gestängeelemente (18, 19), deren Abstand im wesentlichen gleich ist dem Ausschlagweg der Gestängeelemente zwischen ihren Grenzstellungen, und die angepaßt sind, den Taster von einer der beiden entsprechenden Stellungen in die andere hinüberwechseln zu lassen.

7. Vorrichtung nach Anspruch 6, dadurch gekennzeichnet, daß diese Übergangsrampen seitliche Anschlagsbereiche (33A, 33B, 34A, 34B) mit einer vorstehenden zentralen Nockenzone (33C, 34C) verbinden.

8. Vorrichtung nach mindestens einem der Ansprüche 2 bis 7, dadurch gekennzeichnet, daß die Gestängeelemente (18, 19) auf einer selben Welle (14) schwenkbar angeordnet sind, wobei das eine (18) von ihnen (18) frei drehen kann, während das andere (19) fest mit der Welle verbunden ist.

9. Vorrichtung nach Anspruch 8, dadurch gekennzeichnet, daß die Gestängeelemente (18, 19) schwenkbar auf der Gangdurchgangswelle (14) des Getriebes (13) angeordnet sind.

10. Vorrichtung nach mindestens einem der Ansprüche 2 bis 9, dadurch gekennzeichnet, daß die nebeneinander angeordneten Gestängeelemente (18, 19) mittels eines federnden Koppelmittels (20) miteinander befestigt sind, das zugleich in Ausnehmungen (25, 30) in diesen Elementen eingesetzt ist.

11. Vorrichtung nach Anspruch 10, dadurch gekennzeichnet, daß die Gestängeelemente mittels einer Feder (20) miteinander verbunden sind, die in identischen, in diesen Elementen ausgebildeten Fenstern (25, 30) derart eingesetzt und gehalten ist, daß sie an den senkrecht zur Bahn des Ausschlagswegs der Elemente zwischen ihren Grenzpositionen verlaufenden Rändern dieser Fenster anliegt.

12. Vorrichtung nach Anspruch 11, dadurch gekennzeichnet, daß die Feder unter Druckvorspannung steht.

FIG.1

FIG.2

0 186 573

FIG.4   FIG.5   FIG.3   FIG.6   FIG.7

0 186 573